# FASCICULE DE BREVET EUROPEEN

(11) **EP 2 288 754 B1**
(45) Date de publication et mention de la délivrance du brevet: **04.05.2016**
(21) Numéro de dépôt: 09766064.1
(22) Date de dépôt: 08.06.2009
(51) Int. Cl.: E01F 7/04, F16F 7/12, F16F 7/14

(54) **DISSIPATEUR D'ENERGIE ET FILET DISSIPANT CORRESPONDANT**
LEISTUNGSABSCHWÄCHER UND ABSCHWÄCHUNGSSTROM
POWER DISSIPATOR AND DISSIPATING STREAM

(30) Priorité: 18.06.2008 FR 0803401
(43) Date de publication de la demande: 02.03.2011
(73) Titulaire: ENGINEERISK, 73800 Sainte-Hélène-du-Lac (FR)
(72) Inventeur: BERTHET-RAMBAUD, Philippe, F-73390 Châteauneuf (FR)
(74) Mandataire: Verriest, Philippe
(86) Numéro de dépôt international: PCT/FR2009/051072
(87) Numéro de publication internationale: WO 2009/153502

(56) Documents cités:
- EP-A- 0 494 046
- EP-A- 1 870 522
- US-A1- 2007 125 613

## Description

L'invention concerne un dissipateur d'énergie ainsi qu'un filet dissipant correspondant.

Il est connu d'utiliser un dissipateur d'énergie afin de limiter l'effet de chocs sur les structures à base de câbles, cordes ou sangles. Un dissipateur est notamment utilisé dans des applications telles que les lignes de vie ou les écrans de protection, par exemple contre la chute de pierres ou de blocs.

Les documents US 2008/0006757 (EP-A- 1870522) et US 5 961 099 décrivent chacun un dissipateur d'énergie comprenant au moins un élément tubulaire en forme générale de boucle et présentant une première et une seconde extrémités liées l'une à l'autre par l'intermédiaire d'un élément de liaison, l'élément tubulaire étant destiné au passage d'un câble et étant agencé de sorte qu'une partie de l'énergie de traction du câble est dissipée par déformation de l'élément tubulaire y compris au travers de l'éléments de liaison.

Le terme câble désigne ci-après aussi bien des câbles métalliques que des cordes textiles ou encore des sangles.

Ainsi, en cas de choc, une traction importante est exercée sur le câble de sorte que, lorsque l'effort de traction atteint un seuil prédéfini, l'élément tubulaire passe progressivement à travers la pièce de liaison et est déformé. Une partie de l'énergie du choc est ainsi dissipée lors de ce processus, ce qui permet de limiter l'effet du choc sur le câble, en aval du dissipateur par rapport à la source du choc.

Plus particulièrement, dans le cas des documents précités, l'élément de liaison est un manchon de sertissage enserrant les extrémités de l'élément tubulaire. Ainsi, lors de la déformation de l'élément tubulaire, les dimensions de la boucle sont progressivement réduites et les extrémités de l'élément tubulaire glissent avec frottement l'une sur l'autre et à l'intérieur du manchon. L'énergie dissipée correspond à la somme de l'énergie de déformation de l'élément tubulaire par cintrage et de l'énergie de frottement.

L'énergie pouvant être absorbée par un tel dissipateur est limitée, ce qui oblige, soit à multiplier le nombre de dissipateurs le long du câble, soit à surdimensionner le dissipateur utilisé.

L'invention vise à remédier à cet inconvénient en proposant un dissipateur capable d'absorber une plus grande quantité d'énergie.

A cet effet, l'invention concerne un dissipateur d'énergie comprenant au moins un élément tubulaire en forme générale de boucle et présentant une première et une seconde extrémités liées l'une à l'autre par l'intermédiaire d'un élément de liaison, l'élément tubulaire étant destiné au passage d'un câble et étant agencé de sorte qu'une partie de l'énergie de traction du câble est dissipée par déformation de l'élément tubulaire lors de la traction du câble, caractérisé en ce que les première et seconde extrémités de l'élément tubulaire sont fixées à l'élément de liaison, de manière à ce que l'élément tubulaire se déforme en accordéon par flambage lors de la traction du câble destiné a passer dans cet élément.

De cette manière, lorsqu'un choc se produit en transmettant son énergie au câble, ce dernier est soumis à un effort de traction important, l'élément tubulaire se déformant alors à la fois par flexion, en réduisant les dimensions de la boucle, et par flambage en accordéon au niveau des extrémités. La déformation par flambage est une déformation plastique permettant d'absorber une grande partie de l'énergie du choc. L'intérêt est également de conserver la continuité du câble principal et donc de maintenir la liaison correspondante même si l'élément tubulaire doit atteindre ses limites (flambage complet).

En outre, lors de la déformation de l'élément tubulaire par flambage, la section interne de ce dernier est progressivement diminuée de sorte que le câble a tendance à frotter contre la paroi interne de l'élément tubulaire. Plus la déformation est importante, plus les efforts de frottement augmentent et plus la dissipation d'énergie est importante.

En fonction de l'effort de traction et du dimensionnement de l'élément tubulaire, le flambage peut concerner non pas les seules extrémités mais toute la longueur de l'élément tubulaire.

Selon une caractéristique de l'invention, l'élément de liaison comporte une première et une seconde ouvertures traversantes au niveau desquelles sont fixées les première et seconde extrémités de l'élément tubulaire, les ouvertures étant destinées au passage du câble.

Avantageusement, le dissipateur comporte une pluralité d'éléments tubulaires en forme de boucles, les extrémités de chaque élément tubulaire étant fixées à l'élément de liaison.

Selon une possibilité de l'invention l'élément tubulaire est monté de manière amovible sur l'élément de liaison.

De cette manière, après déformation plastique, l'élément tubulaire peut être changé et l'élément de fixation peut être conservé, ce dernier étant dimensionné pour résister à des efforts ou des chocs importants.

Selon une première forme de réalisation, l'élément de liaison comporte une première face et une seconde face, tournée du côté opposé à la première, les première et seconde extrémités de l'élément tubulaire étant fixées respectivement au niveau de la première et de la seconde faces.

Selon une seconde forme de réalisation, l'élément de liaison comporte une première face et une seconde face, tournée du côté opposé à la première, les première et seconde extrémités de l'élément tubulaire étant fixées au niveau de la même face de l'élément de liaison.

Le choix de la forme de réalisation dépend de l'application pour laquelle le dissipateur est utilisé.

Avantageusement, l'élément tubulaire présente une forme générale circulaire.

Selon une autre possibilité de l'invention, l'élément tubulaire présente une forme générale de U.

L'invention concerne en outre un filet dissipant à des fins de protection, en particulier contre la chute de pierres, comportant une pluralité de mailles, caractérisé en ce qu'au moins l'une des mailles est équipée d'au moins un dissipateur d'énergie selon l'invention.

De cette manière, il est possible de dissiper l'énergie de choc à proximité de la zone d'impact de la pierre ou du bloc sur le filet.

De toute façon, l'invention sera bien comprise à l'aide de la description qui suit ,en référence au dessin schématique annexé représentant, à titre d'exemples, plusieurs formes de réalisation de ce dissipateur d'énergie.
Figure 1 en est une vue en perspective, avant déformation de l'élément tubulaire ;
Figure 2 en est une vue de dessus, après déformation de l'élément tubulaire ;
Figure 3 est une vue correspondant à la figure 1, d'une variante de réalisation de l'invention.
Figures 4 et 5 sont des vues correspondant aux figures 1 et 2, d'une variante de réalisation de l'invention.
Figure 6 est un diagramme illustrant l'effort de traction absorbé par l'élément tubulaire lors d'un choc.
Figure 7 est une vue schématique d'une réalisation possible de filet dissipant à anneaux équipé de plusieurs dissipateurs selon l'invention. Ce principe peut également s'appliquer aux filets de mailles de câble.
Figures 8 et 9 sont des vues d'une maille du filet équipée d'un dissipateur selon l'invention, respectivement avant et après déformation de l'élément tubulaire.

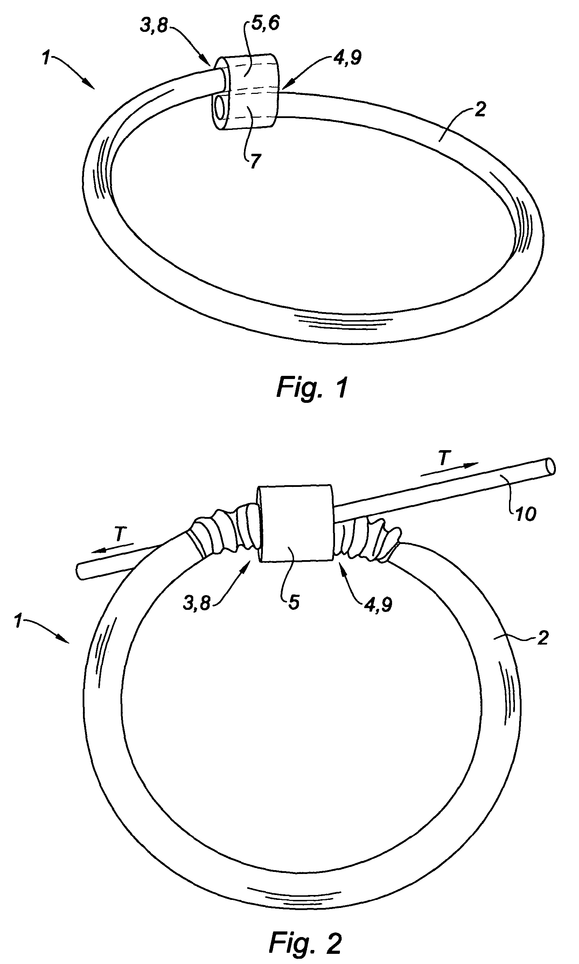

Une première forme de réalisation d'un dissipateur 1 selon l'invention est représentée aux figures 1 et 2.

Celui-ci comprend un élément tubulaire 2 en forme générale de boucle circulaire en hélice, réalisé en acier ou en aluminium. L'élément tubulaire 2 comporte une première et une seconde extrémité 3, 4.

Le dissipateur 1 comporte un élément de liaison 5 de forme générale allongée et présentant une première et une seconde ouvertures traversantes 6, 7 décalées l'une de l'autre et s'étendant transversalement.

Les premières et seconde extrémités 3, 4 de l'élément tubulaire 2 sont respectivement fixées de manière amovible à l'intérieur ou en regard des premières et seconde ouvertures 6, 7.

Plus particulièrement, l'élément de liaison 2 comporte une première face 8 et une seconde face 9, tournée du côté opposé à la première 8, les première et seconde extrémités 3, 4 de l'élément tubulaire 2 étant fixées respectivement au niveau de la première et de la seconde faces 8, 9.

Ainsi, un câble 10 peut être inséré par la première ouverture 6, s'étendre à l'intérieur de l'élément tubulaire 2 puis ressortir par la seconde ouverture 7.

Le câble 10 peut par exemple être destiné à former une ligne de vie, ou encore être relié à une structure subissant de forts impacts comme un filet de protection, en particulier contre la chute de pierres.

Lors d'un choc, par exemple en cas de chute d'une personne reliée à la ligne de vie ou en cas de chute de pierres, le câble 10 est soumis à un effort de traction T importante, dans un intervalle de temps court.

Selon un exemple de réalisation, le diamètre de la boucle formée par l'élément tubulaire 2 est de l'ordre de 60 cm, la section de l'élément tubulaire 2 étant de l'ordre de 3 à 4 cm de diamètre pour une épaisseur de l'ordre de 1 à 2 mm.

Dans la forme de réalisation représentée aux figures, l'élément tubulaire 2 présente une section ronde. D'autres sections peuvent être utilisées. C'est ainsi notamment que la section de l'élément tubulaire 2 peut être carrée.

Le dissipateur 1 permet de ménager le câble 10 pour qu'il ne rompe pas ou ne soit pas endommagé.

Comme cela est représenté à la figure 2, l'élément tubulaire 2 est déformé lors du choc de sorte que les extrémités 3, 4 fixées à l'élément de liaison 5 se déforment en accordéon par flambage.

Les dimensions des zones déformées dépendent de la puissance du choc. Il est ainsi possible que la déformation se propage depuis les extrémités 3, 4 sur toute la longueur de l'élément tubulaire 2.

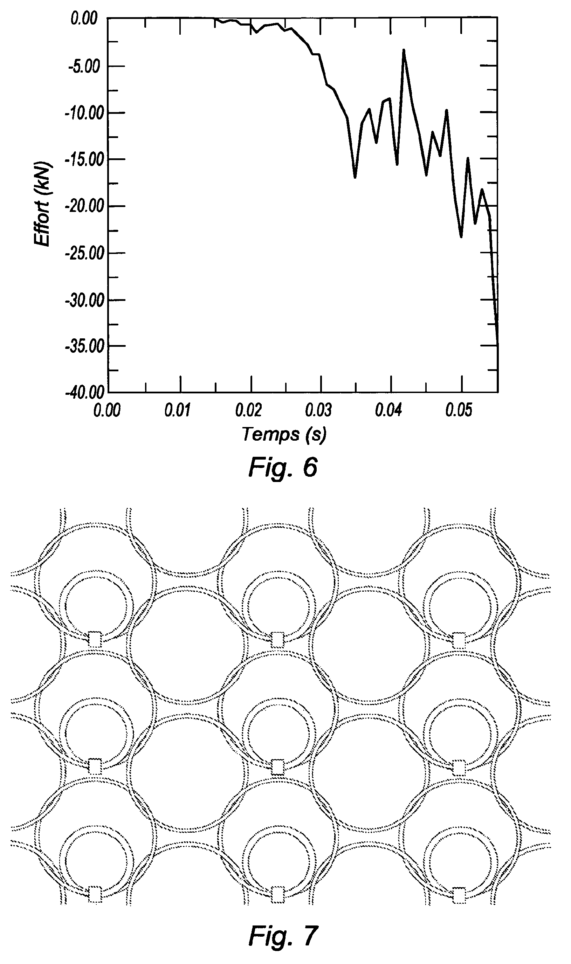

La figure 6 représente la forme possible de l'effort de traction sur le câble au cours de la déformation de l'élément tubulaire 2 en fonction du temps, lors d'un tel choc. Plus particulièrement la position temporelle 0 correspond à l'initiation du choc. On remarque que, au début du choc, l'élément tubulaire 2 est facilement déformé. Au fur et à mesure d'une telle déformation, les forces de frottement du câble 10 à l'intérieur de l'élément tubulaire 2 augmentent et la déformation de l'élément tubulaire par flambage devient progressivement de plus en plus difficile. Ainsi, l'effort et donc l'énergie nécessaires pour déformer l'élément de tubulaire augmente progressivement, permettant ainsi un amortissement efficace du choc.

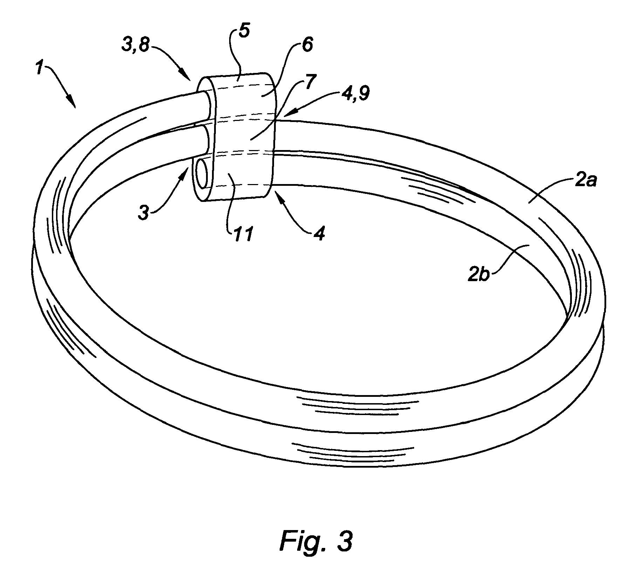

La figure 3 représente une forme de réalisation de l'invention dans laquelle le dissipateur 1 comporte un premier et un second éléments tubulaires 2a, 2b en forme de boucles fixés à l'élément de liaison. Dans ce cas, l'élément de liaison comporte une première 6, une deuxième 7 et une troisième 11 ouvertures traversantes. Les premières et seconde extrémités 3, 4 du premier élément tubulaire 2a sont fixées respectivement, au niveau de la première et de la seconde ouverture 6, 7, de part et d'autre de l'élément de liaison 5. Les premières et seconde extrémités 3, 4 du second élément tubulaire 2b sont fixées respectivement au niveau de la seconde et la troisième ouverture 7, 11, de part et d'autre de l'élément de liaison 5. Il est ainsi possible d'augmenter les capacités de dissipation du choc en autorisant une plus longue distance d'amortissement.

Il est également possible de prévoir plus de deux éléments tubulaires 2, en fonction des besoins.

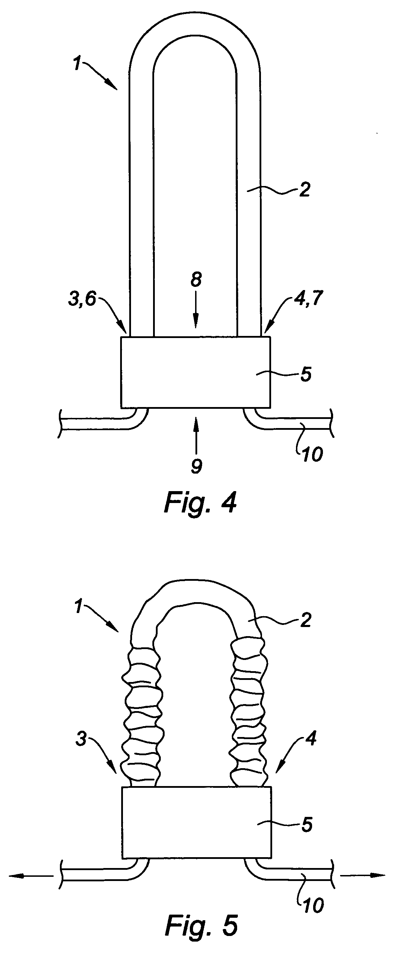

Les figures 4 et 5 décrivent une autre forme de réalisation de l'invention, dans laquelle l'élément tubulaire 2 forme un U dont les première et seconde extrémités 3, 4 sont fixées sur la première face 8 de l'élément de liaison 5, respectivement en regard de la première et de la seconde ouvertures 6, 7. Dans ce cas, le câble 10 s'étend hors de l'élément tubulaire 2 et de l'élément de liaison 5 au niveau de chacune des ouvertures 6, 7, depuis la seconde face 9.

Comme cela apparaît à la figure 5, les extrémités 3, 4 du U sont également déformées en accordéon par flambage lorsque le câble 10 est soumis à des efforts de traction importants.

La figure 7 représente un filet dissipant destiné à des fins de protection 11, notamment contre la chute de pierres. Ce filet peut être soutenu latéralement par des poteaux et fixé par un système de haubanage pour constituer ensuite un écran pare-pierre où l'énergie d'impact est déjà dissipée au sein même du filet lui-même..

Le filet 11 est constitué d'une pluralité de mailles circulaires 14.

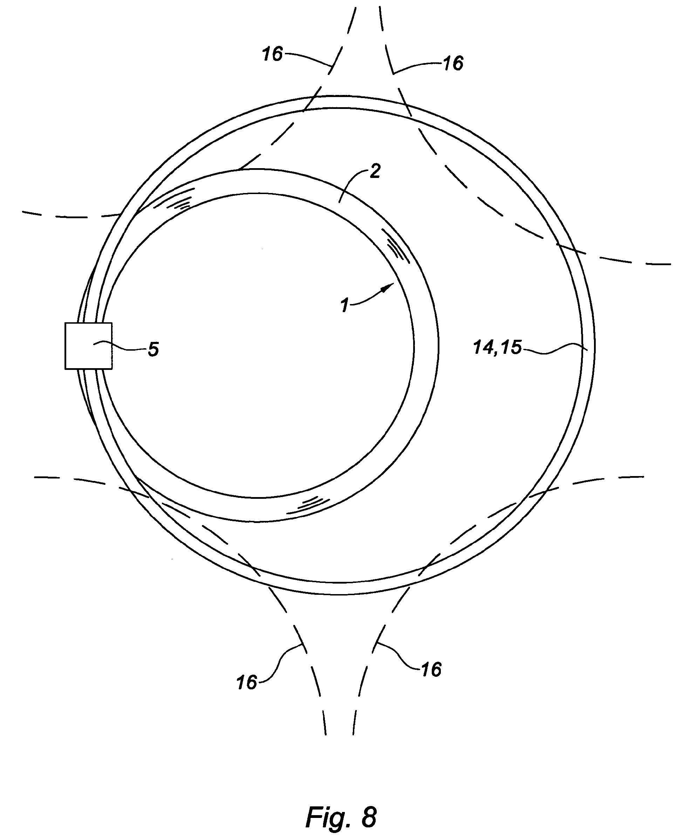

Au moins une des mailles 14 est équipée d'un dissipateur 1 selon l'invention, comme cela est représenté aux figures 7 et 8.

Comme cela est représenté à la figure 8, chaque maille équipée du dissipateur 1 est formée par un câble 15 agencé en forme générale de cercle. Ledit câble 15 est inséré dans le ou les éléments tubulaires 2 du dissipateur 1. La maille concernée 14 est imbriquée avec les mailles adjacentes 16, représentées en pointillés, pour constituer le filet. Le nombre de mailles adjacentes 16 varie en fonction des applications.

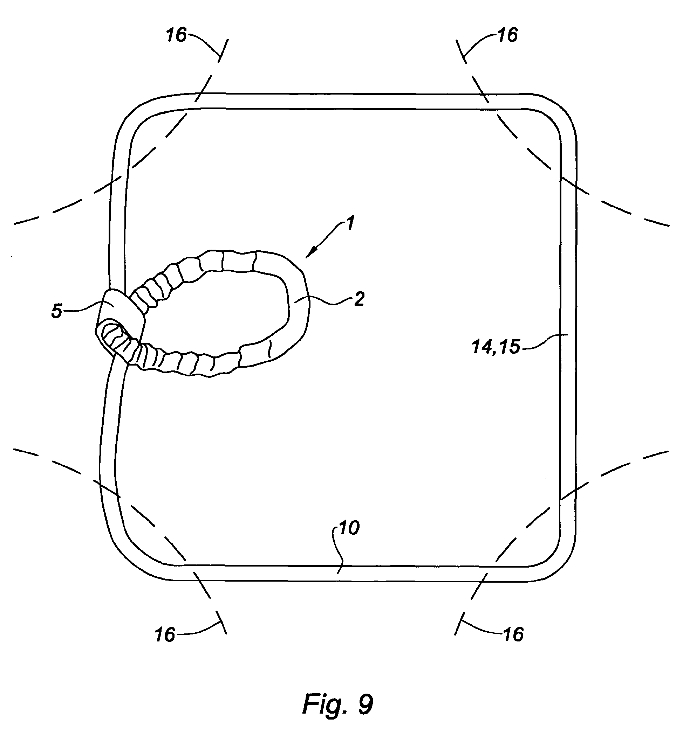

Ainsi, lors de la déformation de la maille correspondante 14, par exemple en cas de chute d'une pierre dans le filet, ladite maille a progressivement tendance à s'agrandir tandis que l'élément tubulaire correspondant 2 est progressivement déformé par flambage lors du choc, comme cela est représenté à la figure 9.

De cette manière, il est possible de dissiper l'énergie de choc à proximité de la zone d'impact de la pierre ou du bloc sur le filet 11. Une répartition régulière des dissipateurs 1 sur les mailles 14, 16 permet d'assurer une dissipation homogène du choc quelle que soit la position de l'impact.

L'utilisation d'un tel filet 11 pour constituer un écran permet de limiter l'adjonction de dissipateurs additionnels au niveau du haubanage, le choc étant déjà en grande partie absorbé au niveau des mailles 14 précitées. En outre, chaque maille peut être équipée de plusieurs dissipateurs selon l'invention.

Comme il va de soi l'invention ne se limite pas aux seules formes de réalisation de ce dissipateur d'énergie, décrites ci-dessus à titre d'exemples, mais elle embrasse au contraire toutes les variantes.

## Revendications

1. Dissipateur d'énergie (1) comprenant au moins un élément tubulaire (2) en forme générale de boucle et présentant une première et une seconde extrémités (3, 4) liées l'une à l'autre par l'intermédiaire d'un élément de liaison (5), l'élément tubulaire (2) étant destiné au passage d'un câble (10) et étant agencé de sorte qu'une partie de l'énergie de traction du câble est dissipée par déformation de l'élément tubulaire (2) lors de la traction du câble, **caractérisé en ce que** les première et seconde extrémités (3, 4) de l'élément tubulaire sont fixées à l'élément de liaison (5), de manière à ce que l'élément tubulaire se déforme en accordéon par flambage lors de la traction du câble destiné à passer dans cet élément.

2. Dissipateur (1) selon la revendication 1, **caractérisé en ce que** l'élément de liaison (5) comporte une première et une seconde ouvertures traversantes (6, 7) au niveau desquelles sont fixées les première et seconde extrémités (3, 4) de l'élément tubulaire (2), les ouvertures étant destinées au passage du câble (10).

3. Dissipateur (1) selon l'une des revendications 1 et 2, **caractérisé en ce qu'**il comporte une pluralité d'éléments tubulaires (2) en forme de boucles, les extrémités (3, 4) de chaque élément tubulaire (2) étant fixées à l'élément de liaison (5).

4. Dissipateur (1) selon l'une des revendications 1 à 3, **caractérisé en ce que** l'élément tubulaire (2) est monté de manière amovible sur l'élément de liaison (5).

5. Dissipateur (1) selon l'une des revendications 1 à 4, **caractérisé en ce que** l'élément de liaison (5) comporte une première face (8) et une seconde face (9), tournée du côté opposé à la première (8), les première et seconde extrémités (3, 4) de l'élément tubulaire (2) étant fixées respectivement au niveau de la première et de la seconde faces (8, 9).

6. Dissipateur (1) selon l'une des revendications 1 à 4, **caractérisé en ce que** l'élément de liaison (2) comporte une première face (8) et une seconde face (9), tournée du côté opposé à la première (8), les première et seconde extrémités (3, 4) de l'élément tubulaire (2) étant fixées au niveau de la même face (8) de l'élément de liaison.

7. Dissipateur (1) selon l'une des revendications 1 à 6, **caractérisé en ce que** l'élément tubulaire (2) présente une forme générale circulaire.

8. Dissipateur (1) selon l'une des revendications 1 à 6, **caractérisé en ce que** l'élément tubulaire (2) présente une forme générale de U.

9. Filet dissipant (11), en particulier contre la chute de pierres, comportant une pluralité de mailles (14, 16), **caractérisé en ce qu'**au moins l'une des mailles (14) est équipée d'au moins un dissipateur d'énergie (1) selon l'une des revendications 1 à 8.

## Patentansprüche

1. Energiedissipator (1), zumindest ein rohrförmiges Element (2) in einer allgemeinen Schleifenform umfassend, und ein erstes und ein zweites Ende (3, 4) aufweisend, die über ein Verbindungselement (5) miteinander verbunden sind, wobei das rohrförmige Element (2) zur Durchführung eines Kabels (10) bestimmt ist, und derart angeordnet ist, dass ein Teil der Traktionsenergie des Kabels durch die Verformung des rohrförmigen Elements (2) bei der Traktion des Kabels abgeleitet wird, **dadurch gekennzeichnet, dass** das erste und das zweite Ende (3, 4) des rohrförmigen Elements am Verbindungselement (5) befestigt sind, sodass sich das rohrförmige Element bei der Traktion des Kabels, das dazu bestimmt ist, durch dieses Element zu führen, durch Knicken faltig verformt.

2. Dissipator (1) nach Anspruch 1, **dadurch gekennzeichnet, dass** das Verbindungselement (5) eine erste und eine zweite durchgehende Öffnung (6, 7) umfasst, im Bereich derer das erste und das zweite Ende (3, 4) des rohrförmigen Elements (2) befestigt sind, wobei die Öffnungen zum Durchführen des Kabels (10) bestimmt sind.

3. Dissipator (1) nach einem der Ansprüche 1 und 2, **dadurch gekennzeichnet, dass** er eine Vielzahl von rohrförmigen Elementen (2) in Form von Schleifen umfasst, wobei die Enden (3, 4) eines jeden rohrförmigen Elements (2) am Verbindungselement (5) befestigt sind.

4. Dissipator (1) nach einem der Ansprüche 1 bis 3, **dadurch gekennzeichnet, dass** das rohrförmige Element (2) in abnehmbarer Form auf dem Verbindungselement (5) montiert ist.

5. Dissipator (1) nach einem der Ansprüche 1 bis 4, **dadurch gekennzeichnet, dass** das Verbindungselement (5) eine erste Seite (8) und eine zweite Seite (9) umfasst, die der entgegengesetzten Richtung zur ersten Seite (8) zugewandt ist, wobei das erste und zweite Ende (3, 4) des rohrförmigen Elements (2) jeweils im Bereich der ersten und der zweiten Seite (8, 9) befestigt sind.

6. Dissipator (1) nach einem der Ansprüche 1 bis 4, **dadurch gekennzeichnet, dass** das Verbindungselement (2) eine erste Seite (8) und eine zweite Seite (9) umfasst, die der entgegengesetzten Richtung zur ersten Seite (8) zugewandt ist, wobei das erste und zweite Ende (3, 4) des rohrförmigen Elements (2) im Bereich derselben Seite (8) des Verbindungselements befestigt sind.

7. Dissipator (1) nach einem der Ansprüche 1 bis 6, **dadurch gekennzeichnet, dass** das rohrförmige Element (2) eine allgemeine kreisrunde Form aufweist.

8. Dissipator (1) nach einem der Ansprüche 1 bis 6, **dadurch gekennzeichnet, dass** das rohrförmige Element (2) eine allgemeine U-Form aufweist.

9. Fangnetz (11), im Speziellen gegen Steinschlag, eine Vielzahl von Maschen (14, 16) umfassend, **dadurch gekennzeichnet, dass** zumindest eine der Maschen (14) mit zumindest einem Energiedissipator (1) nach einem der Ansprüche 1 bis 8 ausgestattet ist.

## Claims

1. An energy dissipator (1) comprising at least one generally loop-shaped tubular element (2) presenting a first and a second ends (3, 4) connected to each other via a connecting element (5), the tubular element (2) being intended for the passage of a cable (10) and arranged so that a portion of the tensile energy of the cable is dissipated by deformation of the tubular element (2) when the cable is pulled, **characterized in that** the first and second ends (3, 4) of the tubular element are fastened to the connecting element (5), so that the tubular element is deformed in an accordion pattern by buckling when the cable, intended to pass within this element, is pulled.

2. The dissipator (1) according to claim 1, **characterized in that** the connecting element (5) includes a first and a second through openings (6, 7) at which the first and second ends (3, 4) of the tubular element (2) are fastened, the openings being intended for the passage of the cable (10).

3. The dissipator (1) according to any of claims 1 and 2, **characterized in that** it includes a plurality of loop-shaped tubular elements (2), the ends (3, 4) of each tubular element (2) being fastened to the connecting element (5).

4. The dissipator (1) according to any of claims 1 to 3, **characterized in that** the tubular element (2) is removably mounted on the connecting element (5).

5. The dissipator (1) according to any of claims 1 to 4, **characterized in that** the connecting element (5) includes a first face (8) and a second face (9) facing the side opposite to the first face (8), the first and second ends (3, 4) of the tubular element (2) being fastened respectively at the first and at second faces (8, 9).

6. The dissipator (1) according to any of claims 1 to 4, **characterized in that** the connecting element (5) includes a first face (8) and a second face (9) facing the side opposite to the first face (8), the first and second ends (3, 4) of the tubular element (2) being fastened at the same face (8) of the connecting element.

7. The dissipator (1) according to any of claims 1 to 6, **characterized in that** the tubular element (2) is generally circular-shaped.

8. The dissipator (1) according to any of claims 1 to 6, **characterized in that** the tubular element (2) is generally U-shaped.

9. A dissipating net (11), in particular for rockfall protection, including a plurality of meshes (14, 16), **characterized in that** at least one of the meshes (14) is equipped with at least one energy dissipator (1) according to any of claims 1 to 8.
